(19) Europäisches Patentamt

European Patent Office

Office européen des brevets

(11) **EP 0 796 161 B1**

(12) **EUROPÄISCHE PATENTSCHRIFT**

(45) Veröffentlichungstag und Bekanntmachung des Hinweises auf die Patenterteilung:
**13.10.1999 Patentblatt 1999/41**

(21) Anmeldenummer: **95942102.5**

(22) Anmeldetag: **11.12.1995**

(51) Int. Cl.$^6$: **B23B 27/00**, B23B 27/16

(86) Internationale Anmeldenummer:
**PCT/EP95/04871**

(87) Internationale Veröffentlichungsnummer:
**WO 96/18471 (20.06.1996 Gazette 1996/28)**

(54) **BOHRWERKZEUG MIT UMSETZSCHNEIDPLATTEN**

DRILLING TOOL WITH RESET INSERTS

OUTIL DE PER AGE A PLAQUETTES RAPPORTEES DE REPOSITIONNEMENT

(84) Benannte Vertragsstaaten:
**AT BE CH DE ES FR GB IT LI LU NL SE**

(30) Priorität: **10.12.1994 DE 4444023**
**14.10.1995 DE 19538390**

(43) Veröffentlichungstag der Anmeldung:
**24.09.1997 Patentblatt 1997/39**

(73) Patentinhaber: **KENNAMETAL INC.**
**Latrobe, PA 15650-0231 (US)**

(72) Erfinder: **KRENZER, Ulrich**
**D-90513 Zirndorf (DE)**

(74) Vertreter:
**Tergau, Enno, Dipl.-Ing.**
**Mögeldorfer Hauptstrasse 51**
**90482 Nürnberg (DE)**

(56) Entgegenhaltungen:
**EP-A- 0 181 844**          **EP-A- 0 502 541**

## Beschreibung

Die Erfindung betrifft ein Bohrwerkzeug für Bohrungen in Metallvollmaterial mit den im Oberbegriff des Anspruches 1 aufgeführten Merkmalen (siehe EP-A-181 844).

Marktübliche Bohrwerkzeuge sind überwiegend mit „neutralen" Umsetzschneidplatten bestückt, so daß sie in ähnlicher Form auch für Dreh- oder Fräswerkzeuge einsetzbar sind. Ein optimales Zerspanungsergebnis gerade beim Bohren läßt sich mit ihnen jedoch nicht erreichen.

Am weitesten verbreitet sind Bohrwerkzeuge mit sogenannten Trigon-Umsetzschneidplatten (DE 27 30 418 C2, EP 54 913 B1). Die dort beschriebenen Umsetzschneidplatten haben sich für größere Bohrwerkzeuge mit einem Bohrdurchmesser über 25 mm bewährt und sie sind wirtschaftlich. Bei richtiger Positionierung von Innen- und Außenschneide ist ein stabiles, ausgeglichenes Schnittverhalten mit nur geringen Abdrängkräften gewährleistet. Die Schneidplatten können unter einem nahezu beliebigen Anstellwinkel im Grundkörper positioniert werden. Bei Bohrdurchmessern unter 25 mm haben die bekannten Trigon-Wendeschneidplatten den Nachteil eines nur sehr kleinen Hartmetallvolumens. Dadurch sind sie thermisch und mechanisch nicht hoch belastbar. Deswegen haben sich für kleinere Bohrdurchmesser Bohrwerkzeuge mit länglicher, mehr rechteckiger Form durchgesetzt (EP 181 844 B1). Die bekannte Schneidengeometrie der Trigon-Umsetzschneidplatten ist auf diese im wesentlichen rechteckigen Schneidplatten weitgehend unverändert übertragen worden. Dadurch wird ein deutlicher Stabilitätsgewinn erreicht. Ein Nachteil bei Bohrwerkzeugen mit solchen mehr quaderförmigen Umsetzschneidplatten besteht jedoch darin, daß bei ihrer Anwendung in Bohrwerkzeugen mit gewendelter Spannut der die Umsetzschneidplatte aufnehmende Teil des Bohrers den Spanabfluß behindert. Für den Spanabfluß ist eine reibungsarme Abführung der Späne von den Schneidkanten wichtig und dazu sind große Drallwinkel vorteilhaft. Außerdem sind wegen der räumlichen Verhältnisse Umsetzschneidplatten mit rechteckiger Umrißform schwieriger unterzubringen als die bekannten Trigon-Schneidplatten. Eine Umpositionierung zum Schnittkraftausgleich ist daher schwierig. Ein Schnittkraftausgleich durch ungleiche Teilung zwischen Innen- und Außenschneide verursacht mit solchen Schneidplatten bei großen Drehzahlen erhebliche Unwucht und beeinträchtigt damit das Bohrergebnis negativ. Außerdem ist bei dem bekannten Bohrwerkzeug die Spankammer der Außenschneide verhältnismäßig klein, obwohl sie etwa dreiviertel des Spanvolumens zu bewältigen hat.

Der Erfindung liegt die Aufgabe zugrunde, die verbesserte Stabilität länglicher Umsetzschneidplatten mit den günstigen Zentriereigenschaften von Trigon-Schneidplatten zu verbinden und eine günstige Spanabfuhr aus dem Schneidenbereich sicherzustellen.

Diese Aufgabe wird durch die Merkmale des Anspruches 1 gelöst. Durch die Ausgestaltung der Schneidplatten eines Bohrwerkzeuges wird als wesentlicher Vorteil ein Schnittkraftausgleich erreicht. Dieser ergibt sich durch die rinnenförmige Ausmuldung und insbesondere durch den in einem stumpfen Spitzenwinkel zueinanderstehenden Schneidkanten der Schneidplatten-Schneide. Durch die in Schnittrichtung bzw. in der Schneiderebene gesehen gewinkelte Anordnung der Schneidkanten ist ein radial nach außen gerichtetes Aodrängen des Bohrwerkzeuges verringert. Die rinnenförmige Ausbildung der Schneidplatten bewirkt, daß ein vom Werkstück abgehobener Span in Richtung auf seine spätere Sollform, nämlich eine Spanwendel, in erheblichem Ausmaß bereits vorgeformt wird. Der Span trifft nach dieser Formung auf die sich an die Schneidplatte in Spanablaufrichtung anschließende Spankammerwand stumpfwinklig, d. h. unter verringerter Reibung, auf. Die Spanabfuhr ist somit durch die erfindungsgemäße Ausgestaltung eines Bohrwerkzeuges verbessert.

Die Stabilität im Wirkbereich eines Bohrwerkzeuges wird insbesondere dadurch verbessert, wenn ein Verhältnis von Länge zu Breite der Schneidplatten zwischen 1,2 und 1,8 eingehalten wird. Die Schneideigenschaften des erfindungsgemäßen Bohrwerkzeugs können dadurch optimiert werden, daß für den stumpfen Spitzenwinkel zwischen den die Schneidplatte bildenden Schneidkanten von 135° bis 165° eingehalten wird.

Weitere Vorteile gehen aus der nun folgenden Beschreibung und den beigefügten Zeichnungen hervor. Es zeigen:

Fig.1 eine nach Art einer Umsetzschneidplatte ausgebildete Schneidplatte in perspektivischer Ansicht,
Fig.2 eine Schneidplatte nach Fig.1 in Draufsicht,
Fig.3 eine Seitenansicht in Richtung des Pfeiles III, Fig.2,
Fig.4 eine Ansicht in Richtung des Pfeiles IV in Fig.2,
Fig.5 einen Längsschnitt entlang der Linie V-V in Fig.2,
Fig.6 eine perspektivische Ansicht des Spitzenbereiches eines erfindungsgemäßen und mit zwei Umsetzschneidplatten ausgerüsteten Bohrwerkzeuges,
Fig.7 eine Draufsicht auf den Spitzenbereich des Bohrwerkzeugs nach Fig.6,
Fig.8 eine Seitenansicht des Bohrers nach Fig.7 in Richtung des Pfeiles VIII,
Fig.9,10 zwei Ansichten entsprechend Fig. 7 und 8, wobei das Bohrwerkzeug gegenüber der Stellung in Fig.7 und 8 um 90° im Uhrzeigersinn verdreht ist,
Fig.11,12 ein Bohrwerkzeug gemäß Fig.7 und 8, jedoch um 180° im Uhrzeigersinn verdreht,

| Fig.13 | eine Seitenansicht eines erfindungsgemäßen Bohrwerkzeugs, an dem die Kräfteverhältnisse dargestellt sind, |
| Fig.14 | eine Darstellung der auf die Schneidplatten einwirkenden Hauptschnittkräfte, |
| Fig.15 | ein Kräftedreieck, aus dem die aus den Hauptschnittkräften resultierende Kraft ersichtlich ist, |
| Fig.16 | eine Querschnittsdarstellung eines Bohrloches in einem Werkstück, bei der die Überdeckungsverhältnisse von zwei an einem rotierenden Bohrwerkzeug angeordneten Schneidplatten schematisch verdeutlicht sind, |
| Fig.17,18 | zwei Abbildungen entsprechend Fig.7 und 8, in denen jeweils die Bildung eines Spanes angedeutet ist, |
| Fig.19 | eine Ausführungsform einer Schneidplatte, bei der sowohl die Übergänge zwischen der Grundplatte und den schräg gestellten Seitenflächen kontinuierlich erfolgt und bei der die Grundfläche und auch die Seitenflächen konkav ausgemuldet sind, und |
| Fig.20 | eine Schneidplatte gemäß Fig.19, bei der zusätzlich Spanformrippen bzw. Spanformrillen in der Spanfläche vorhanden sind. |

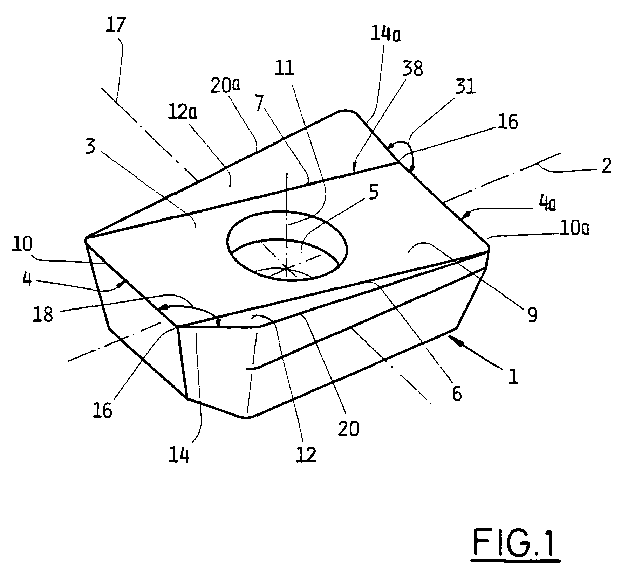

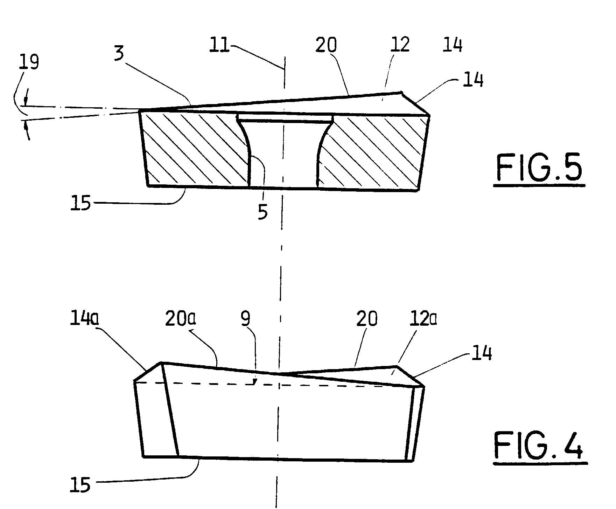

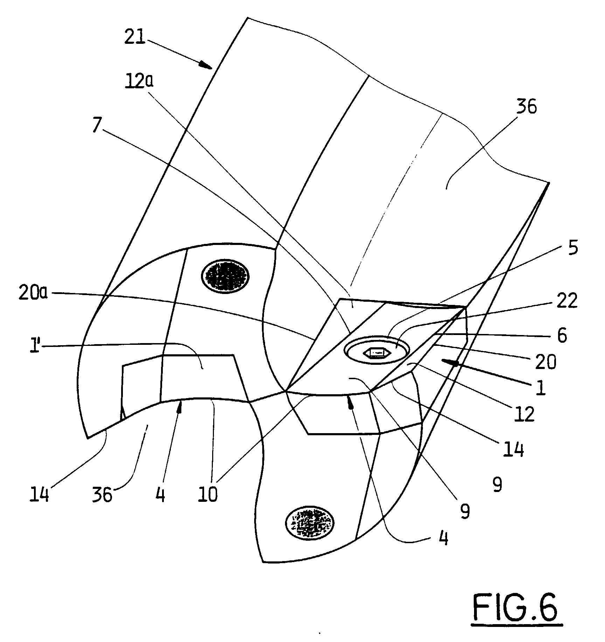

Die insbesondere in Fig.1-5 in mehreren Ansichten dargestellte Schneidplatte 1 ist von im wesentlichen rechteckiger, jedenfalls in Richtung ihrer Längsachse 2 gestreckter Bauform. Ihre Spanflächenseite 3 ist rinnenartig ausgemuldet und ihre Schneiden 4,4a sind im Bereich der beiden Enden der Rinne gebildet.

Die Rinne enthält eine hinsichtlich ihrer längeren Parallelseiten 6,7 mit der Längsachse 2 einen spitzen Winkel 8 bildende Grundfläche 9 mit der Umrißform etwa eines Parallelogramms. Dessen kürzere Parallelogrammseiten bilden die eine Schneidkante 10 bzw. 10a der jeweiligen Schneide 4 bzw. 4a. Zentral in der Schneidplatte 1 ist eine Fixierbohrung 5 angeordnet, deren Bohrungsachse 11 orthogonal zur Längsachse 2 und zur Auflagefläche 15 der Schneidplatten bzw. zu deren Planebene verläuft.

Weiterhin enthält die Rinne zwei die längeren Parallelseiten 6,7 der Rinne flankierende Seitenflächen 12,12a in Form je eines stumpfwinkligen Dreiecks, dessen Basisseite mit jeweils einer der längeren Parallelseite 6,7 zusammenfällt und dessen kurze Schenkel als weitere Schneidkanten 14 bzw. 14a gemeinsam mit der Ihnen benachbarten, kürzeren Parallelogrammseite der Grundfläche 9, nämlich der Schneidkante 10 bzw. 10a, gemeinsam eine Schneidplatten-Schneide 4 bzw. 4a mit den Schneidspitzen 16 bzw. 16a bilden. Das Verhältnis zwischen Länge L und Breite B der Schneidplatte 1 liegt zwischen etwa 1,2 und 1,8. Die beiden je eine Schneidplattenschneide 4 bzw. 4a bildenden Schneidkanten 10,14 bzw. 10a,14a stehen in einem stumpfen Spitzenwinkel 18 von etwa 135° bis 165° zueinander.

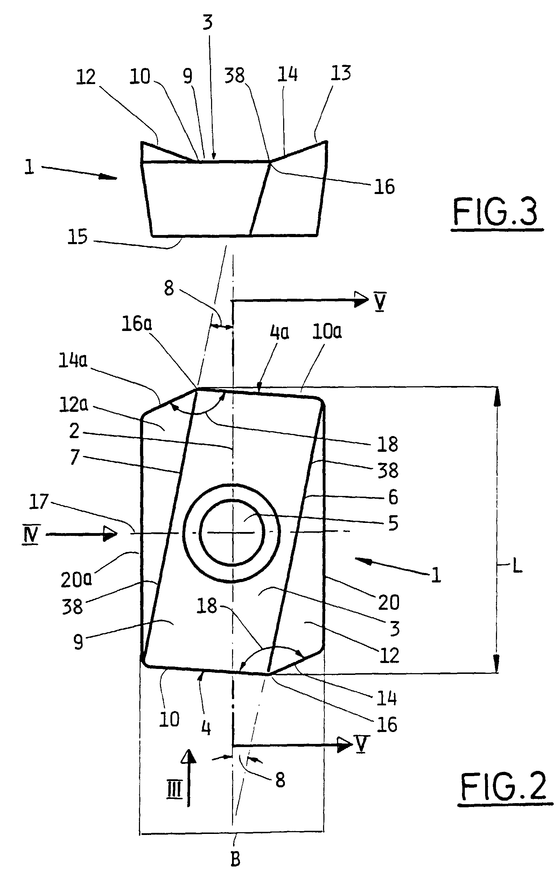

Die längeren Schenkel des jeweils die Seitenflächen 12 und 12a umgrenzenden stumpfwinkligen Dreiecks bilden die Nebenschneiden 20,20a der Schneidplatte 1. Die Nebenschneiden 20,20a bilden mit der Grundfläche 9 bzw. mit der von der Längsachse 2 und der Querachse 17 der Schneidplatte 1 aufgespannten Planebene bzw. mit der Längsachse 2 der Schneidplatte 1 einen spitzen Winkel 19, dessen Wert etwa 5° bis 20° beträgt. Die hinsichtlich ihrer Ausrichtung weitgehend durch die Grundfläche 9 bestimmte Rinne ist bei den in den Abbildungen dargestellten rechtsschneidenden Bohrwerkzeugen im Uhrzeigersinn (Bild 1) verdreht und bei linksschneidenden Werkzeugen gegen den Uhrzeigersinn. Genauer gesagt sind die Schneidplatten für linksschneidende Werkzeuge spiegelbildlich zu jenen für rechtsdrehende ausgebildet, wobei ausgehend von Fig.2, die Spiegelebene den mit L bezeichneten Doppelpfeil enthält und orthogonal zur Planebene der Schneidplatte 1 bzw. der Zeichenebene verläuft.

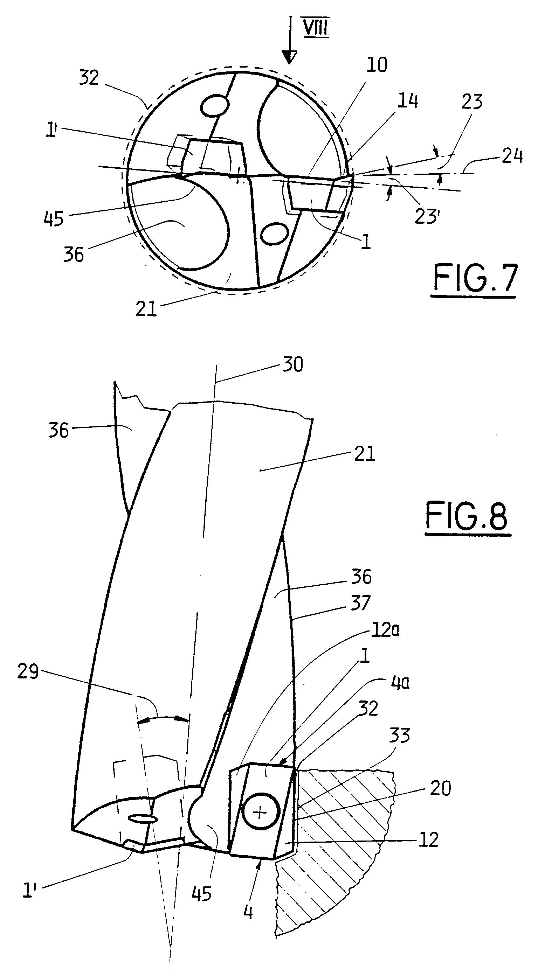

Die Schneidplatten liegen jeweils in einer im Spitzenbereich eines Bohrwerkzeugs 21 angeordndeten Aufnahmeausnehmung ein und sind dort mit einer z.B. Befestigungsschraube 22 fixiert. Sie sind so positioniert, daß der Neigungswinkel 23 der radial äußeren Schneidkante 14 der Seitenfläche 12 einer Schneidplatte 1 zweckmäßig größer ist als der Neigungswinkel 23' der radial inneren Schneidkante 10 (Fig.7). Der Neigungswinkel 23' der radial inneren Schneidkante 10 kann sogar einen negativen Wert annehmen. Bezugsebene ist dabei die Werkzeug-Bezugsebene 24.

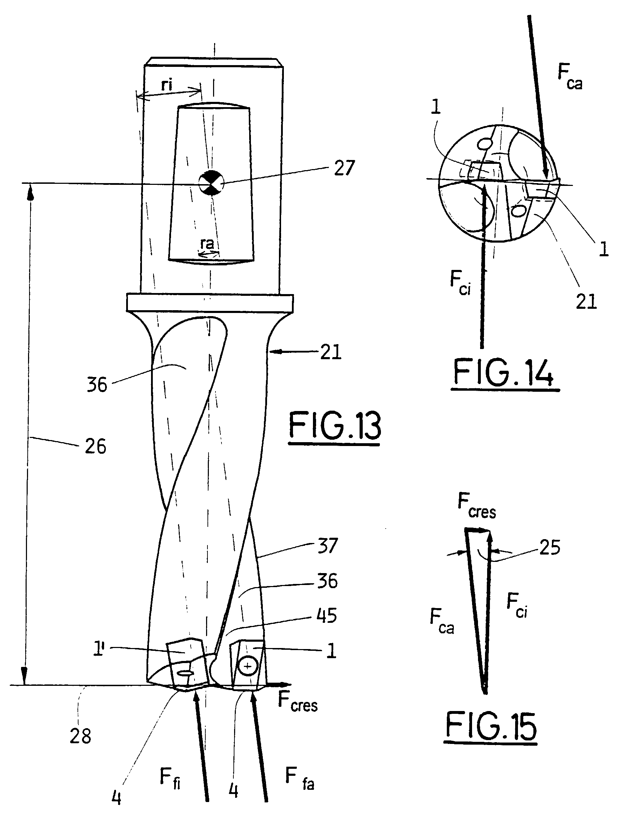

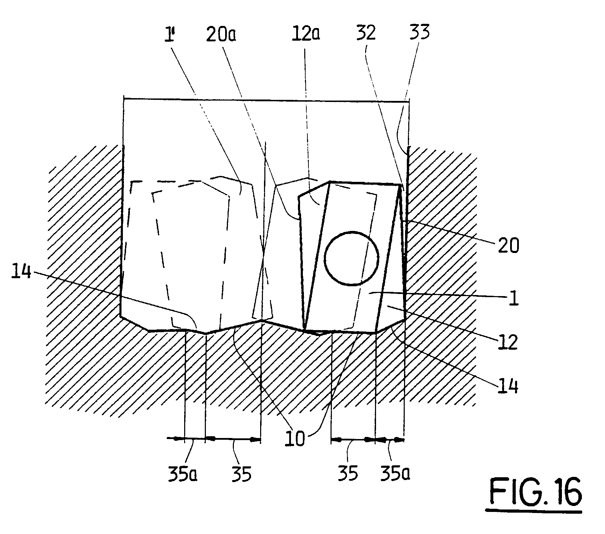

Addiert man alle Teilschnittkräfte, die auf die einzelnen Schneidplatten 1,1' einwirken, so ergibt sich eine auf die radial innenliegende Schneidplatte 1' gerichtete Hauptschnittkraft $F_{ci}$ und eine auf die radial außenliegende Schneidplatte 1' wirkende Hauptschnittkraft $F_{ca}$. Diese beiden Hauptschnittkräfte verlaufen aufgrund der unterschiedlichen Neigungswinkel 23 bzw. 23' in Verbindung mit den sich ergebenden Eingriffsbreiten 35 an der radial äußeren und der radial inneren Schneidplatte 1 gegeneinander unter einem spitzen Winkel 25 (Fig.15). Die resultierende Kraft $F_{cres}$ dieser beiden Hauptschnittkräfte bewirkt über den Hebelarm 26 ( Fig.13) ein Drehmoment in Richtung der radial außenliegenden Schneidplatte 1. Der Hebelarm 25 bemißt sich vom Einspannpunkt 27 des Bohrerschaftes bis zur Schneidenebene 28. Die oben erwähnten Eingriffsbreiten 35 sind aus Fig. 16 ersichtlich. Die Eingriffsbreite 35 der Schneidkante 10 ist bei der radial äußeren Schneidplatte 1 kleiner als bei der radial inneren Schneidplatte 1'. Die Eingriffsbreite 35a der Schneidkante 14 ist dagegen bei der radial äußeren Schneidplatte 1 größer als bei der radial inneren Schneidplatte 1'. Mit anderen Worten arbeitet die äußere Schneidplatte 1 vollständig auf der Schneidkante 14 und teilweise auf der Schneidkante 10. Die innere Schneidplatte 1 arbeitet praktisch vollständig auf der Schneidkante 10 und teilweise auf der Schneidkante 14.

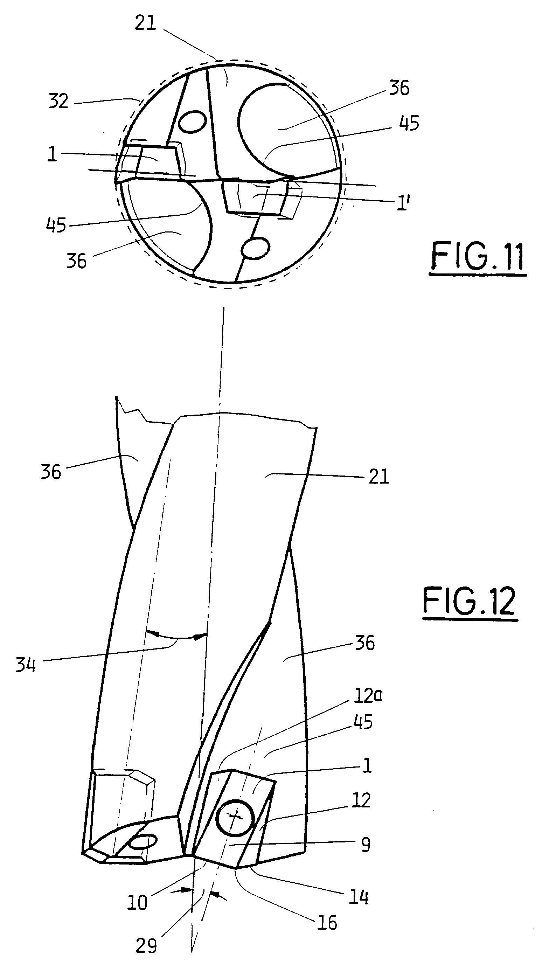

Die radial innen angeordnete Schneidplatte 1' ist um einen sich in Richtung auf die Bohrerspitze schließenden Winkel 29 von 5 bis 15° geneigt zur Bohrwerkzeugachse 30 positioniert (Fig.8,12,13) Die radial äußere Schneidplatte 1 hingegen nimmt eine solche Winkelstellung gegenüber der Bohrwerkzeugachse 30 ein, daß ihre am Bohrerumfang befindliche Nebenschneide 20,20a einen ausreichenden Freigang 32 zur Bohrungswand 33 besitzt. Das bedeutet einen sich in Richtung auf die Bohrerspitze öffnenden Winkel 34 zwischen der Längsachse 2 der Schneidplatte 1 und der Bohrwerkzeugachse 30. Die Winkel 29 und 34 sind jeweils in der Werkzeugbezugsebene 24 (Fig. 7,9,11,14) gemessen.Der den Freigang 32 erzeugende Winkel 34 hat einen Wert von 0° bis 10°.

Aufgrund der erläuterten Positionierung der beiden Umsetzschneidplatten beim Einbau addieren sich die an den Schneidplatten 1,1' einwirkenden Vorschubkräfte zu Hauptvorschubkräften $F_{fi}$ und $F_{fa}$, wobei erstere auf die innere Schneidplatte 1' und letztere auf die äußere Schneidplatte 1 wirkt. Die Wirkungsrichtung der Hauptvorschubkräfte $F_{fi}$ und $F_{fa}$ erstrecken sich, wie aus Fig.13 ersichtlich ist, schräg zur Bohrwerkzeugachse 30 und bilden mit dieser spitze Winkel. Aus dieser Schrägenwirkung der Hauptvorschubkräfte $F_{fi}$ und $F_{fa}$ ergeben sich radiale Kraftkomponenten, welche über die Hebelarme ra für die Schneide 4 bzw. 4a der äußeren Schneidplatte 1 und über die Hebelarme ri für die Schneide 4 bzw. 4a der inneren Schneidplatte 1' am Einspannpunkt 27 des Bohrwerkzeugs 21 ein Drehmoment bewirken, welches die Bohrerspitze des Bohrwerkzeugs 21 von der Bohrungswand 33 weg zur Bohrwerkzeugachse 30 bzw. zur Bohrlochachse drängt. Beim erfindungsgemäßen Bohrer sind die aus den Vorschubkräften und den Schnittkräften resultierenden Momente einander entgegengesetzt gerichtet. Sie gleichen sich dadurch weitestgehend aus. Es gilt für die am Bohrer angreifenden Momente: $F_{cres}$ x Hebelarm 26 $\approx$ $F_{fi}$ x Hebelarm ri + $F_{fa}$ x Hebelarm ra .

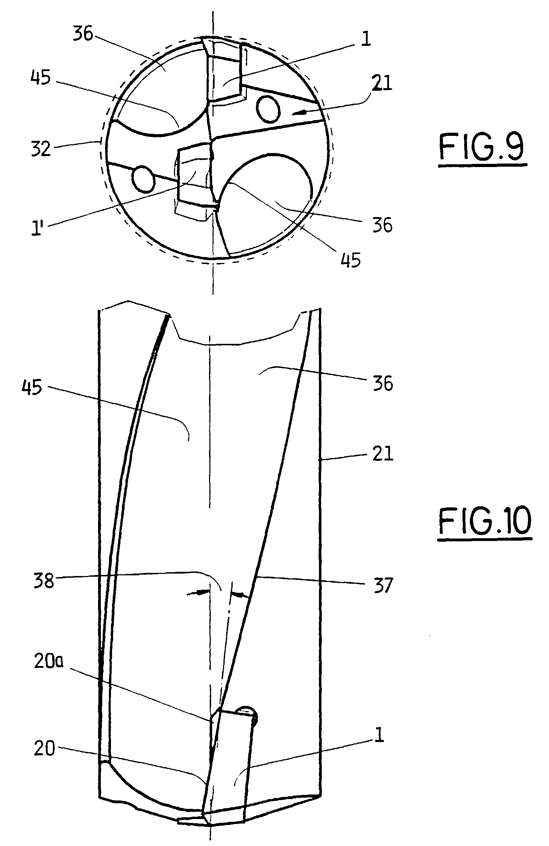

Jede Schneidplatte 1, 1' nimmt in Einbaustellung hinsichtlich der Lage ihrer Grundfläche 9 gegenüber der die Bohrwerkzeugachse 30 enthaltenden Werkzeugbezugsebene 24 eine spitzwinklige Ausrichtung ein. Der spitze Ausrichtungswinkel 38 (Fig.10) schließt sich in Richtung auf die Bohrerspitze. Die Nebenschneide 20 bzw. 20a verläuft daher nahezu stetig in die von der Spannute 36 und der Umfangsfläche des Bohrergrundkörpers gebildete Drallinie 37. Das stellt einen reibungsarmen Abtransport der Späne sicher.

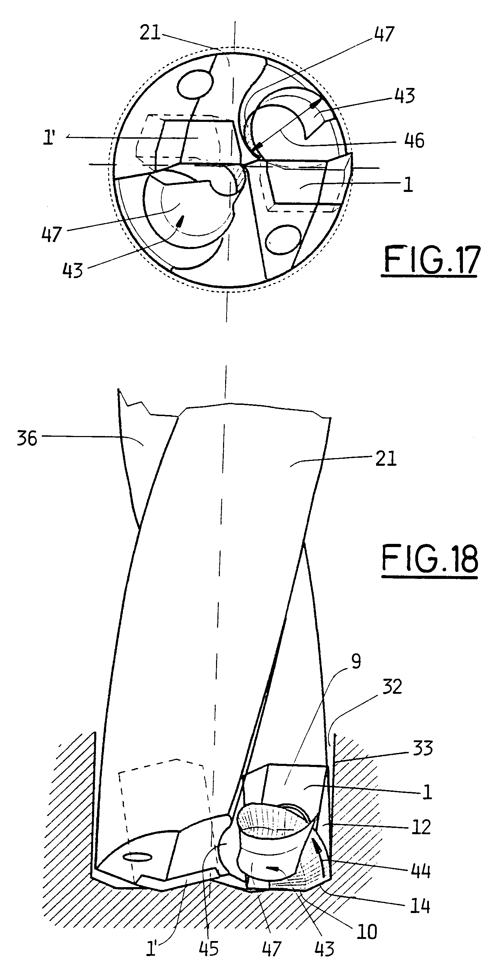

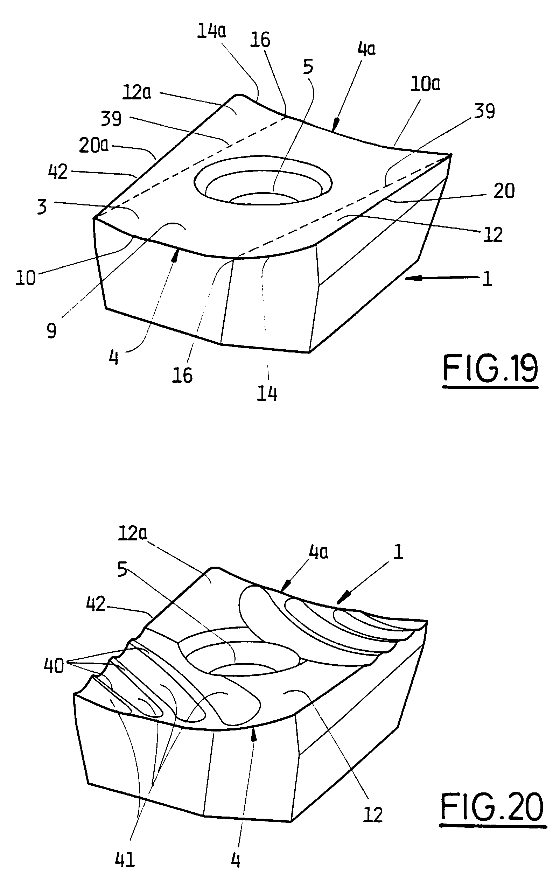

Die Schneidplatten sind so erläutert, als wenn die die Spanflächen der beiden Schneiden 4,4a bildenden Deckflächen, nämlich die Grundfläche 9 und die beiden Seitenflächen 12,12a exakt ebene Flächen sind, die nach Art eines deutlich ausgeprägten Knickes 38 (Fig.1,3) im Bereich der längeren Parallelogrammseiten 6,7 mit einem stumpfen Winkel 31 (Fig.3) aneinandergrenzen. Die Übergänge zwischen diesen die Spanfläche bzw. die Spanflächenseite 3 bildenden Flächen 9,12 und 12a müssen aber nicht nach Art eines deutlichen Knickes ausgeprägt sein. Vielmehr kann es sehr vorteilhaft sein, wenn die Übergänge gleitend ausgerundet sind, wie dies die Ausführungsformen der Fig.19 und 20 zeigen. Um den Übergang zwischen der Grundfläche 9 und den Seitenflächen 12,12a zu verdeutlichen, sind in Fig.19 die gestrichelten Linien 39 eingezeichnet. Auch müssen die genannten, die Spanfläche der Schneidplatte 1 bildenden Deckflächen, nämlich die Grundfläche 9 und die Seitenflächen 12,12a nicht eben sein. Sie können leicht konkav ausgemuldet sein und dabei eine stetig gerundete Querschnittsform aufweisen, wie sie beispielsweise ähnlich der Querschnittsform einer entsprechenden Dachrinne ist. Eine solche Querschnittsform ist aus den Fig. 20 und 21 ersichtlich. Bei der Schneidplatte der Fig.20 sind in die Spanflächenseite 3 noch zusätzlich Spanleitstufen in Form von Spanleitrippen 40 und Spanleitrillen 41 eingearbeitet. Die Spanleitrippen 40 und die Spanleitrillen 41 verlaufen von der Schneide 4 bzw. 4a bogenförmig zu dem im Einbauzustand radial innen angeordneten Flankenbereich 42 der Schneidplatte 1. Durch diesen Verlauf werden die von der Schneide 4, 4a vom Bohrlochgrund abgehobenen Späne 43 (Fig.17,18) in Spanablaufrichtung 44 in die Spankammer des Bohrwerkzeuges 21 hinein geleitet. Die Spanleitrippen 40 und Spanleitrillen 41 bilden sich im Moment des Entstehens des Spans 44 auf dessen der Spanflächenseite 3 der Schneidplatte 1 zugewandten Rückenfläche 47 zumindest teilweise ab, wodurch eine Zwangsführung des Spans 43 in Richtung der Spanablaufrichtung 44 erreicht wird.

Ein bedeutender Vorteil des Erfindungsgegenstandes besteht darin, daß die beim Zerspanungsvorgang anfallenden Späne sowohl durch die Rinnenform von innerer und äußerer Schneidplatte 1 bzw. 1' so geformt werden, daß sie unter einem stumpfen Winkel auf die innere Spankammerwand 45 auftreffen und durch die Rinnenform der Schneidplatten bereits so geformt werden, daß der Durchmesser des Wendelspanes bzw. der Spanlocke problemlos in das zur Verfügung stehende Spankammervolumen hineinpaßt. Der Durchmesser der gebildeten Spanlocke ist also kleiner oder allenfalls gleich groß wie die Tiefe 46 (Fig.17) der jeweiligen Spankammer. Bei konventionellen Wendeplattenbohrern bilden die Schneidplatten eine nahezu ebene Deckfläche. Dort werden die Späne erst am aus weicherem Werkstoff bestehenden Grundkörper umgelenkt. Beim erfindungsgemäßen Werkzeug hingegen werden die Späne bereits im Kontaktbereich mit den aus hartem Werkstoff bestehenden Schneidplatten so geformt, daß sie am Grundkörper keinen nennenswerten Verschleiß mehr bewirken, sondern vielmehr im zur Verfügung stehenden Spanraum knickfrei abrollen. Die so entstehenden Spanlocken bzw. Wendelspäne sorgen für einen störungsfreien Zerspanungsprozeß.

| Bezugszeichenliste | | | |
|---|---|---|---|
| 1 | Schneidplatte | 24 | Werkzeugbezugsebene |

(fortgesetzt)

| Bezugszeichenliste | | | |
|---|---|---|---|
| 2 | Längsachse | 25 | Spitzer Winkel |
| 3 | Spanflächenseite | 26 | Hebelarm |
| 4,4a | Schneide | 27 | Einspannpunkt |
| 5 | Fixierbohrung | 28 | Schneidenebene |
| 6 | längere Parallelogrammseite | 29 | Winkel |
| 7 | längere Parallelogrammseite | 30 | Bohrwerkzeugachse |
| 8 | spitzer Winkel | 31 | Stumpfer Winkel |
| 9 | Grundfläche | 32 | Freigang |
| 10 | Schneidkante | 33 | Bohrungswand |
| 10a | Schneidkante | 34 | Winkel |
| 11 | Bohrungsachse | 35 | Eingriffsbreite |
| 12 | Seitenfläche | 35a | Eingriffsbreite |
| 12a | Seitenfläche | 36 | Spannut |
| 14 | Schneidkante | 37 | Drallinie |
| 14a | Schneidkante | 38 | Knick |
| 15 | Auflagefläche | 39 | Linie |
| 16 | Schneidspitze, | 40 | Spanleitrippe |
| 16a | Schneidspitze | 41 | Spanleitrille |
| 17 | Querachse | 42 | Flankenbereich |
| 18 | Spitzenwinkel | 43 | Span |
| 19 | Neigungswinkel | 44 | Spanablaufrichtung |
| 20 | Nebenschneide | 45 | Spankammerwand |
| 20a | Nebenschneide | 46 | Tiefe |
| 21 | Bohrwerkzeug | 47 | Rückenfläche |
| 22 | Befestigungsschraube | | |
| 23 | Neigungswinkel | | |
| 23' | Neigungswinkel | | |

**Patentansprüche**

1.  Bohrwerkzeug für Bohrungen in Metallvollmaterial

    -   mit einem Grundkörper mit Spannuten für die Spanabfuhr
    -   mit zwei an der Stirnseite des Grundkörpers am Ende jeweils einer Spannut in je einer Aussparung angeordneten, auswechselbaren, gleiche Form und Größe aufweisenden, vorzugsweise als Umsetzschneidplatten ausgebildete Schneidplatten (1),

        -- mit unterschiedlichem Radialabstand von der Bohrerachse (30),
        -- deren Arbeitsbereiche sich etwas überdeckend aneinandergrenzen
        -- von denen zwei einen stumpfen Spitzenwinkel (18) miteinander bildende Schneidkanten (10,14 bzw. 10a,14a) eine im Eingriff stehende Schneide (4 bzw. 4a) bilden,

        gekennzeichnet durch

eine in ihrer Längsrichtung (L) gestreckte Bauform der Schneidplatten (1) mit im wesentlichen in Längsrichtung (L) verlaufender rinnenartiger Ausmuldung ihrer Spanflächenseiten (3) und einer Anordnung der Schneiden (4,4a) an den Rinnenenden,
wobei die Rinne

- eine hinsichtlich ihrer längeren Parallelogrammseiten (6,7) mit der Schneidplattenlängachse (2) einen spitzen Winkel (8) bildende Grundfläche (9) mit der Umrißform etwa eines Parallelogramms enthält,

-- deren kürzere Parallelogrammseiten die eine Schneidkante (10,10a) einer Schneide (4,4a) bilden,

- sowie zwei die längeren Parallelogrammseiten (6,7) der Grundfläche (9) flankierende, in einem stumpfen Winkel (38) aus der Grundfläche (9) aufsteigende Seitenflächen (12,12a) in Form je eines stumpfwinkligen Dreiecks enthält,

-- dessen Basisseite mit jeweils einer der längeren Parallelogrammseiten (6,7) zusammenfällt und dessen kurze Schenkel als weitere Schneidkanten (14,14a) gemeinsam mit einer angrenzenden und die Schneidkanten 10,10a bildenden kürzeren Parallelogrammseite der Grundfläche (9) eine Schneidplatten - Schneide (4,4a) bilden.

2. Werkzeug nach Anspruch 1,
        gekennzeichnet durch
ein Verhältnis von Länge (L) zu Breite (B) der Schneidplatten zwischen 1,2 und 1,8.

3. Werkzeug nach Anspruch 1 oder 2,
        gekennzeichnet durch
einen stumpfen Spitzenwinkel (18) von ca. 135° bis 165° zwischen den eine Schneide (4 bzw. 4a) bildenden Schneidkanten (10,14 bzw. 10a,14a).

4. Werkzeug nach einem der vorhergehenden Ansprüche,
        dadurch gekennzeichnet,
daß die längeren Schenkel des stumpfwinkligen Dreiecks die Nebenschneiden (20,20a) der Schneidplatte bilden, welche mit der Grundfläche (9) der spitze Winkel (19) zwischen den Nebenschneiden (20,20a) und der Grundfläche (9) bzw. der Längsachse (2) der Schneidplatte (1) 5° bis 20° beträgt.

5. Werkzeug nach einem oder mehreren der vorhergehenden Ansprüche,
        gekennzeichnet durch
einen windschiefen Verlauf der Nebenschneiden (20,20a), wobei sie jedoch in der Draufsicht, d.h. in einer rechtwinklig zu ihrer Planebene bzw. zu ihrer Auflagefläche (15) verlaufenden Blickrichtung gesehen parallel zueinander verlaufen.

6. Werkzeug nach einem oder mehreren der vorhergehenden Ansprüche,
        dadurch gekennzeichnet,
daß in Einbaustellung der Betrag des Neigungswinkels (23) der radial äußeren Schneidkante (14) größer ist als der Betrag des Neigungswinkels (23') der radial inneren Schneidkante (10).

7. Werkzeug nach einem oder mehreren der vorhergehenden Ansprüche,
        dadurch gekennzeichnet,
daß die radial innen angeordnete Schneidplatte (1') hinsichtlich des Vorlaufes ihrer Längsachse (2) mit der Bohrerachse (30) einen sich zum Bohrerschaft öffnenden und in der Werkzeugsbezugsebene (24) gemessenen Winkel (29) von etwa 5-15° bildet.

8. Werkzeug nach einem der Ansprüche 1 bis 6,
        dadurch gekennzeichnet,
daß die radial äußere Schneidplatte (1) in einem solchen sich zur Bohrerspitze öffnenden und in der Werkzeugsbezugsebene gemessenen Winkel (34) gegenüber der Bohrwerkzeugachse (30) eingebaut ist, daß ihre am Bohrerumfang befindliche Nebenschneide (20,20a) einen ausreichenden Freigang (22) zur Bohrungswand (33) besitzt.

9. Werkzeug nach Anspruch 8,

gekennzeichnet durch
durch einen Winkel (34) von 0° bis 10°.

10. Werkzeug nach einem oder mehreren der vorhergehenden Ansprüche,
dadurch gekennzeichnet
daß die Nebenschneide (20) der radial äußeren Schneidplatte (1) etwa stetig in die von der Spannute und der Umfangsfläche des Grundkörpers gebildete Drallinie (37) einläuft.

11. Werkzeug nach einem oder mehreren der vorhergehenden Ansprüche,
dadurch gekennzeichnet,
daß die Übergänge zwischen der Grundfläche (9) und den Seitenflächen (12 bzw. 13) gleitend ausgerundet sind.,

12. Werkzeug nach Anspruch 11,
dadurch gekennzeichnet,
daß Grundfläche (9) und Seitenflächen (12,13) derart ausgerundet sind, daß sie eine Rinne von im wesentlichen stetig ausgerundeter Querschnittsform bilden.

## Claims

1. Boring tool for bores in solid metal

    - having a basic body with flutes for chip removal
    - having two interchangeable inserts (1), which are arranged in one recess each at the front end of the basic body at the end of a flute in each case, have the same shape and size and are preferably designed as indexable inserts,
    - having different radial distances from the bore axis (30),
    - the working regions of which adjoin one another in an approximately overlapping manner,
    - of which two cutting edges (10, 14 or 10a, 14a respectively), forming an obtuse point angle (18) with one another, form an engaging tool nose (4 or 4a respectively), characterized by a design of the inserts (1) extended in their longitudinal direction (L) and having a channel-like hollowed-out portion on its chip face sides (3) running essentially in the longitudinal direction (L) and an arrangement of the noses (4, 4a) at the channel ends, in which the channel
    - contains a base surface (9), which, with regard to its longer parallelogram sides (6, 7), forms an acute angle (8) with the insert longitudinal axis (2) and has an outline approximately in the shape of a parallelogram,

        -- the shorter parallelogram sides of which form a cutting edge (10, 10a) of a nose (4, 4a),

    - and contains two side surfaces (12, 12a), which flank the longer parallelogram sides (6, 7) of the base surface (9), rise from the base surface (9) at an obtuse angle (38) and are each in the shape of an obtuse-angled triangle,

        -- whose base side coincides in each case with one of the longer parallelogram sides (6, 7) and whose short legs, as further cutting edges (14, 14a), together with an adjoining shorter parallelogram side, forming the cutting edges (10, 10a), of the base surface (9), form an insert nose (4, 4a).

2. Tool according to Claim 1, characterized by a ratio of length (L) to width (B) of the inserts of between 1.2 and 1.8.

3. Tool according to Claim 1 or 2, characterized by an obtuse point angle (18) of about 135° to 165° between the cutting edges(10, 14 or 10a, 14a) forming a nose (4 or 4a respectively).

4. Tool according to one of the preceding claims, characterized in that the longer legs of the obtuse-angled triangle form the secondary cutting edges (20, 20a) of the insert, which form with the base surface (9) or the longitudinal axis (2) of the insert (1) an acute angle (19) of 5° to 20°.

5. Tool according to one or more of the preceding claims, characterized by a skew profile of the secondary cutting edges (20, 20a), although they run parallel to one another as seen in plan view, i.e. in a direction of view running at right angles to their flat plane or their bearing surface (15).

6. Tool according to one or more of the preceding claims, characterized in that, in the fitted position, the magnitude of the inclination angle (23) of the radially outer cutting edge (14) is greater than the magnitude of the inclination angle (23') of the radially inner cutting edge (10).

7. Tool according to one or more of the preceding claims, characterized in that the insert (1') arranged radially on the inside, with regard to the approach of its longitudinal axis (2), with the borer axis (30), forms an angle (29) of about 5-15°, which opens towards the borer shank and is measured in the tool reference plane (24).

8. Tool according to one of Claims 1 to 6, characterized in that the radially outer insert (1) is fitted at such an angle (34) relative to the boring-tool axis (30), which angle (34)opens towards the borer point and is measured in the tool reference plane, that its secondary cutting edge (20, 20a) located at the borer periphery has sufficient clearance (22) relative to the bore wall (33).

9. Tool according to Claim 8, characterized by an angle (34) of 0° to 10°.

10. Tool according to one or more of the preceding claims, characterized in that the secondary cutting edge (20) of the radially outer insert (1) runs approximately continuously into the helix line (37) formed by the flute and the circumferential surface of the basic body.

11. Tool according to one or more of the preceding claims, characterized in that the transitions between the base surface(9) and the side surfaces (12 and 12a respectively) are rounded off smoothly.

12. Tool according to Claim 11, characterized in that the base surface (9) and side surfaces (12, 12a) are rounded off in such away that they form a channel of essentially continuously rounded-off cross-sectional shape.

## Revendications

1. Outil de perçage destiné à effectuer des perçages dans un matériau métallique plein, comprenant :

   - un corps de base pourvu de gorges à copeaux pour l'évacuation des copeaux,
   - deux plaquettes de coupe (1), réalisées de préférence sous la forme de plaquettes de coupe réversibles, agencées sur la face frontale du corps de base à l'extrémité d'une gorge à copeaux respective dans un évidement correspondant, lesdites plaquettes de coupe étant interchangeables, et présentant la même forme et la même taille ;

      -- lesdites plaquettes de coupe présentant vis-à-vis de l'axe de perçage (30) des écartements radiaux différents,
      -- leurs zones de travail sont adjacentes l'une de l'autre et se chevauchent quelque peu,
      -- parmi les arêtes de coupe desdites plaquettes, deux arêtes (10, 14 ; 10a, 14a) formant l'une avec l'autre un angle obtus (18) constituent un tranchant (4 ; 4a) en engagement ;

   caractérisé par le fait que les plaquettes de coupe (1) ont une forme structurelle allongée en direction longitudinale (L), et présentent sur le côté formant face de coupe (3) un évidement en forme de goulotte qui s'étend essentiellement en direction longitudinale (L), et que les tranchants (4, 4a) sont agencés aux extrémités des goulottes de la goulotte ;
   et que ladite goulotte :
   - comporte une surface de base (9) qui forme, pour ce qui concerne ses faces de parallélogramme allongées (6, 7), un angle aigu (8) avec l'axe longitudinal de la plaquette de coupe (2), et qui présente en contour approximativement la forme d'un parallélogramme,

      -- dont les deux côtés courts de parallélogramme forment l'une des arêtes de coupe (10, 10a) d'un tranchant (4, 4a),

   - et comporte deux faces latérales (12, 12a), flanquant les côtés allongés du parallélogramme (6, 7) de la surface de base (9) en montant sous un angle obtus (38) depuis la surface de base (29), et présentant respectivement la forme d'un triangle obtus,

      -- dont le côté de base coïncide respectivement avec l'un des côtés allongés de parallélogramme (6, 7), et dont les deux côtés courts forment un tranchant (4, 4a), à titre d'arête de coupe supplémentaire (14, 14a), conjointement avec un côté court du parallélogramme de la surface de base (9), adjacent et formant les arêtes de coupe (10, 10a).

2. Outil selon la revendication 1,
caractérisé en ce que le rapport entre la longueur (L) et la largeur (B) des plaquettes de coupe est compris entre 1,2 et 1,8.

3. Outil selon l'une ou l'autre des revendications 1 et 2,
caractérisé par un angle obtus (18) d'environ 135° à 165° entre les arêtes de coupe (10, 14 ; 10a, 14a) formant un tranchant (4 ; 4a).

4. Outil selon l'une des revendications précédentes,
caractérisé en ce que les côtés longs du triangle obtus forment les tranchants auxiliaires (20, 20a) de la plaquette de coupe, lesquels forment avec la surface de base (9) un angle aigu (19) de 5° à 20° entre le tranchant auxiliaire (20, 20a) et la surface de base (9), ou respectivement l'axe longitudinal (2) de la plaquette de coupe (1).

5. Outil selon l'une ou plusieurs des revendications précédentes,
caractérisé par un tracé oblique des tranchants auxiliaires (20, 20a), ceux-ci s'étendant cependant parallèlement l'un à l'autre lorsqu'observés en vue de dessus, c'est-à-dire sous une direction d'observation perpendiculaire à leur plan, ou à leur surface d'appui (15).

6. Outil selon l'une ou plusieurs des revendications précédentes,
caractérisé en ce que, dans la condition de montage, la valeur de l'angle d'inclinaison (23) de l'arête de coupe radiale extérieure (14) est supérieure à la valeur de l'angle d'inclinaison (23') de l'arête de coupe radiale intérieure (10).

7. Outil selon l'une ou plusieurs des revendications précédentes,
caractérisé en ce que la plaquette de coupe (1') agencée radialement à l'intérieur forme, pour ce qui concerne le tracé de son axe longitudinal (2), vis-à-vis de l'axe de perçage (30), un angle ouvert en direction de la tige de perçage, d'environ 5 à 15° lorsque mesuré dans le plan de référence (24) de l'outil.

8. Outil selon l'une des revendications 1 à 6,
caractérisé en ce que la plaquette de coupe radialement extérieure (1) est montée vis-à-vis de l'axe de l'outil de perçage (30) sous un angle (34) qui s'ouvre direction de la pointe de l'outil de perçage et qui, mesuré dans le plan de référence de l'outil, est tel que ses tranchants auxiliaires (20, 20a) qui se trouvent à la périphérie de l'outil de perçage, présentent un espace libre suffisant (22) vis-à-vis de la paroi du perçage (33).

9. Outil selon la revendication 8,
caractérisé en ce que l'angle (34) est compris entre 0° et 10°.

10. Outil selon l'une ou plusieurs des revendications précédentes,
caractérisé en ce que les tranchants auxiliaires (20) de la plaquette de coupe radialement extérieure (1) se transforment approximativement en continu dans la ligne hélicoïdale (37) formée par la gorge à copeaux et par la surface périphérique du corps de base.

11. Outil selon l'une ou plusieurs des revendications précédentes,
caractérisé en ce que les transitions entre la surface de base (9) et les surfaces latérales (12 ; 13) sont arrondies de manière à présenter des propriétés de coulissement.

12. Outil selon la revendication 11,
caractérisé en ce que la surface de base (9) et les surfaces latérales (12, 13) sont arrondies de telle manière qu'elles forment une rainure avec une forme de section transversale arrondie sensiblement en continu.

FIG.1

FIG.3

FIG.2

FIG.5

FIG.4

FIG.6

VIII

32  1'  10  14  23  24  45  36  23'  1  21

FIG.7

30  36  21  FIG.8  36  37  12a  1  4a  32  33  20  12  29  1'  45  4

FIG.9

FIG.10

FIG.11

FIG.12

FIG.13

FIG.14

FIG.15

FIG.16

FIG.17

FIG.18

FIG.19

FIG.20